# EUROPÄISCHE PATENTSCHRIFT

(11) **EP 3 987 498 B1**
(45) Veröffentlichungstag und Bekanntmachung des Hinweises auf die Patenterteilung: **20.09.2023**
(21) Anmeldenummer: 20734478.9
(22) Anmeldetag: 18.06.2020
(51) Int. Cl.: G08C 17/00, B23Q 17/00, B23Q 17/20, G01B 21/04

(54) **VERFAHREN ZUM VERBINDEN EINER SENDE- UND EMPFANGSEINHEIT MIT EINEM MESSINSTRUMENT**
METHOD FOR CONNECTING A TRANSCEIVER UNIT TO A MEASURING INSTRUMENT
PROCÉDÉ POUR RELIER UNE UNITÉ D'ÉMISSION ET DE RÉCEPTION À UN INSTRUMENT DE MESURE

(30) Priorität: 24.06.2019 DE 102019116873
(43) Veröffentlichungstag der Anmeldung: 27.04.2022
(73) Patentinhaber: M&H Inprocess Messtechnik GmbH, 88289 Waldburg (DE)
(72) Erfinder: WIEST, Christoph, 88250 Weingarten (DE)
(74) Vertreter: Otten, Roth, Dobler & Partner mbB Patentanwälte
(86) Internationale Anmeldenummer: PCT/EP2020/066879
(87) Internationale Veröffentlichungsnummer: WO 2020/260116

(56) Entgegenhaltungen:
- EP-A2- 2 296 122
- EP-A2- 2 479 735
- DE-A1-102012 022 116

## Beschreibung

### Stand der Technik

Eine Messvorrichtung umfassend einen Receiver und ein Messinstrument, insbesondere in Form eines Messtasters ist beispielsweise aus der DE 10 2012 022 116 A1 bekannt.

Bei einer bekannten Messvorrichtung kommuniziert der Receiver mit dem Messinstrument über eine drahtlose Verbindung durch Übermittlung von Funksignalen.

Eine Kopplung des Receiver mit dem Messinstrument erfolgt bei diesem bekannten System dadurch, dass der Receiver und das Messinstrument eine Identifizierungsinformation austauschen. Mittels der angelernten Identifizierungsinformation kann in einem späteren Verfahren der Receiver zwischen verschiedenen Messinstrumenten unterscheiden und beispielsweise nur auf Datensignale des bereits identifizierten Messinstruments reagieren.

Bei einer bekannten Messvorrichtung erfolgt die Kopplung beispielsweise durch Aktivierung des Messinstruments, wobei das Messinstrument nach Aktivierung für eine definierte Zeitspanne einen Broadcast mit seiner Identifizierungsinformation sendet. Diese Identifizierungsinformation empfängt der Receiver und speichert sie ab, womit das Messinstrument und der Receiver gekoppelt sind, sodass der Receiver Datensignal des Messinstruments verarbeitet. Nachteilig an einem solchen Verfahren ist, dass nicht sichergestellt ist, dass der Receiver mit dem richtigen Messinstrument gekoppelt ist.

### Aufgabe und Vorteile der Erfindung

Aufgabe der vorliegenden Erfindung ist es, ein verbessertes Verfahren zum Verbinden einer Sende- und Empfangseinheit einer Messvorrichtung mit einem Messinstrumente der Messvorrichtung bereitzustellen.

Die Aufgabe wird durch die Merkmale des Anspruchs 1 gelöst.

Die abhängigen Ansprüche zeigen zweckmäßige und vorteilhafte Ausführungsformen der Erfindung.

Die Erfindung geht von einem Verfahren zum Verbinden einer Sende- und Empfangseinheit einer Messvorrichtung mit einem Messinstrument der Messvorrichtung, wobei die Messvorrichtung an eine Maschine anordenbar ist, mit folgenden nacheinander durchzuführenden Verfahrensschritten aus:
- Prüfen des Messinstruments, ob ein erstes Schaltsignal, welches durch ein Schalten eines Schaltelements einer Schaltvorrichtung des Messinstruments erfolgt, vorhanden ist,
- Senden einer Verbindungsanfrage durch eine Sendevorrichtung der Sende- und Empfangseinheit,
- Empfangen der Verbindungsanfrage durch das Messinstrument, insbesondere durch ein Sende- und Empfangsorgan des Messinstruments, und Verarbeiten der Verbindungsanfrage durch das Messinstrument, insbesondere durch eine Steuereinheit des Messinstruments,
- Senden einer ersten Verbindungsbestätigungs-Nachricht durch das Messinstrument, insbesondere durch das Sende- und Empfangsorgan des Messinstruments, an die Sende- und Empfangseinheit,
- Empfangen der ersten Verbindungsbestätigungs-Nachricht durch eine Empfangsvorrichtung der Sende- und Empfangseinheit und Verarbeiten der ersten Verbindungsbestätigungs-Nachricht durch die Sende- und Empfangseinheit,
- Senden eines Bestätigungssignals an eine Steuervorrichtung (3) der Maschine (1) durch die Sende- und Empfangseinheit (7) nach dem Empfangen und Verarbeiten der ersten Verbindungsbestätigungs-Nachricht,
- Prüfen des Messinstruments, ob ein weiteres Schaltsignal vorhanden ist, wobei das Schaltsignal durch ein Schalten eines Schaltelements einer Schaltvorrichtung des Messinstruments erfolgt,
- Senden einer zweiten Verbindungsbestätigungs-Nachricht durch das Messinstrument, insbesondere durch das Sende- und Empfangsorgan des Messinstruments, an die Sende- und Empfangseinheit,
- Empfangen und Verarbeiten der zweiten Verbindungsbestätigungs-Nachricht durch die Sende- und Empfangseinheit.

Hierdurch ist ein Verfahren zum Verbinden einer Sende- und Empfangseinheit einer Messvorrichtung mit einem Messinstrument der Messvorrichtung bereitgestellt, mittels welchem sicher gestellt ist, dass die Sende- und Empfangseinheit mit dem richtigen Messinstrument koppelt.

Vorteilhafterweise prüft die Steuereinheit des Messinstruments, ob ein Schaltsignal durch ein Schalten des Schaltelements ausgelöst ist. Bevorzugterweise startet oder stoppt die Steuereinheit nach einem Erhalt eines Schaltsignals einen Timer bzw. einen Zeitgeber der Steuereinheit.

Das Schaltelement der Schaltvorrichtung des Messinstruments ist z.B. als ein insbesondere elektronischer Schalter ausgebildet. Das Schaltelement ist beispielsweise als ein Schalter, z.B. als ein Tastschalter, ein Kippschalter und/oder als ein Drehschalter vorhanden. Bevorzugterweise ist an einem Gehäuse des Messinstruments ein insbesondere separates Schaltelement ausgebildet. Denkbar ist auch, dass das Schaltelement als ein schaltendes Sensorelement ausgebildet ist, z.B. als ein Abstandssensor und/oder ein Tastsensor. Beispielsweise ist das Schaltelement als ein optischer, kapazitiver und/oder induktiver Schalt-Sensor vorhanden.

Bevorzugterweise wird ein inhärent vorhandener Schalter des Messinstruments als Schaltelement verwendet. Beispielsweise umfasst ein inhärent vorhandener Schalter des Messinstruments die Funktion des Schaltelements. Vorteilhafterweise ist ein inhärent vorhandener Schalter des Messinstruments als Schaltelement ausgebildet. Z.B. wird ein Tastschalter und/oder ein Taststift eines Touch-Probe-Messtasters, z.B. bei einer Auslenkung eines Taststifts des Touch-Probe-Messtasters, als Schaltelement verwendet. Beispielsweise wird eine Abstandssensor und/oder ein Tastsensor, z.B. ein optischer, kapazitiver und/oder induktiver Schalt-Sensor des Messinstruments als Schaltelement verwendet.

Die Verbindungsanfrage ist vorteilhafterweise als ein Broadcast ausgebildet. Ein Broadcast ist beispielsweise eine Nachricht, bei der Datenpakete der Nachricht von der Sende- und Empfangseinheit aus an alle erreichbaren Messinstrumente übertragen werden.

Auch erweist es sich von Vorteil, dass nach dem Empfangen und Verarbeiten der zweiten Verbindungsbestätigungs-Nachricht durch die Sende- und Empfangseinheit weitere nacheinander durchzuführenden Verfahrensschritte erfolgen:
- Senden von einer Verbindungsinformation durch die Sendevorrichtung der Sende- und Empfangseinheit an das Messinstrument,
- Empfangen, Verarbeiten und/oder Speichern der Verbindungsinformation durch das Messinstrument,
- Senden einer dritten Verbindungsbestätigungs-Nachricht durch das Messinstrument, insbesondere durch das Sende- und Empfangsorgan des Messinstruments, an die Sende- und Empfangseinheit,
- Empfangen und Verarbeiten der dritten Verbindungsbestätigungs-Nachricht und/oder Speichern der Verbindungsinformation durch die Sende- und Empfangseinheit.

Bevorzugterweise wird unter einer Verbindungsinformation ein spezifischer Einstellungswert des Messinstruments, wie z.B. eine Triggerzeit, eine Sende- und/oder Empfangskanaleinstellung, ein Kalibrierungsparameter und/oder eine Abtastrate verstanden.

Außerdem ist es von Vorteil, dass das Messinstrument an einer Maschine, insbesondere einer Werkzeug- und/oder Messmaschine, montiert ist, wobei durch Bewegen einer Bewegungsachse der Maschine relativ zu einer weiteren Komponente der Maschine, insbesondere relativ zu einer weiteren Bewegungsachse der Maschine, und damit durch Bewegen des Messinstruments, das Schalten des Schaltelements der Schaltvorrichtung des Messinstruments bewirkt wird. Hierdurch ist ein vergleichsweise sicheres automatisches Verbinden des Messinstruments mit der Sende- und Empfangseinheit realisierbar. Die Maschine ist vorteilhafterweise als ein CNC-Bearbeitungszentrum vorhanden. Denkbar ist, dass die Maschine als eine Fräs- und/oder Drehmaschine und/oder als ein Fräs- und/oder Drehzentrum vorhanden ist.

Bevorzugterweise ist die Messvorrichtung, insbesondere das Messinstrument an eine Maschine montierbar ausgebildet. Vorteilhafterweise wird das Schalten des Schaltelements durch eine Bewegung einer Maschine, an welcher die Messvorrichtung montiert ist, ausgelöst. Beispielsweise wird durch Bewegen einer Achse der Maschine, an welcher die Messvorrichtung montiert ist, das Schaltelement geschaltet. Denkbar ist auch, dass das Schaltelement durch einen Nutzer von außen geschaltet wird. Vorteilhafterweise umfasst die Maschine die Messvorrichtung. Vorteilhafterweise ist das Messinstrument an einer Bewegungsachse der Maschine montierbar.

Weiter erweist es sich von Vorteil, dass die Messvorrichtung an einer Maschine, insbesondere einer Werkzeug- und/oder Messmaschine, vorhanden ist, wobei zunächst die Sende- und Empfangseinheit prüft, ob eine Übermittlung einer Verbindungsinformation von einer Steuervorrichtung der Maschine an die Sende- und Empfangseinheit erfolgt ist.

Bevorzugerweise wird zunächst, insbesondere vor oder nach einem ersten Schalten des Schaltelements, insbesondere vor dem Senden der Verbindungsanfrage durch die Sende- und Empfangseinheit, die Verbindungsinformation von der Steuervorrichtung der Maschine an die Sende- und Empfangseinheit übermittelt. Die Steuervorrichtung ist vorteilhafterweise als eine Computerized Numerical Control (CNC) ausgebildet.

Vorteilhafterweise umfasst das Verfahren einen weiteren Verfahrensschritt, welcher vorteilhafterweise vor dem Senden der Verbindungsanfrage erfolgt und welcher ein Verarbeiten eines Aktivierungsbefehls zur Aktivierung eines Verbindungsablaufs oder eines Verbindungsvorgangs der Sende- und Empfangseinheit umfasst.

Der Aktivierungsbefehl ist beispielsweise durch Schalten eines Schalters der Sende- und Empfangseinheit ausgebildet. Zum Beispiel wird der Aktivierungsbefehl durch Schalten eines Schalters der Sende- und Empfangseinheit aktiviert. Denkbar ist auch, dass der Aktivierungsbefehl durch Verarbeiten der Verbindungsinformation durch die Sende- und Empfangseinheit ausgelöst wird. Beispielsweise umfasst die Verbindungsinformation den Aktivierungsbefehl.

Der Verbindungsablauf umfasst vorteilhafterweise die im Verbindungsverfahren der Sende- und Empfangseinheit mit der Messvorrichtung vorhandenen Schritte.

In einer vorteilhaften Ausbildung des Verfahrens ist die Messvorrichtung an einer Maschine, insbesondere einer Werkzeug- und/oder Messmaschine, vorhanden, wobei nach dem Empfangen und Verarbeiten der ersten Verbindungsbestätigungs-Nachricht durch die Sende- und Empfangseinheit die Sende- und Empfangseinheit ein Bestätigungssignal an die Steuervorrichtung der Maschine sendet.

Vorteilhafterweise erfolgt nach dem Erhalt des Bestätigungssignals durch die Steuervorrichtung eine Bewegung, beispielsweise ein Fahren, der Bewegungsachse der Maschine, an welcher das Messinstrument montiert ist, wodurch ein Schalten des Schaltelements der Schaltvorrichtung bewirkt wird.

Bevorzugterweise umfasst die Sende- und Empfangseinheit eine Schnittstelle zum Verbinden der Sende- und Empfangseinheit mit der Steuervorrichtung der Maschine. Vorteilhafterweise ist die Sende- und Empfangseinheit über eine physische Verbindung, z.B. mittels eines Kabels, mit der Steuervorrichtung der Maschine verbindbar ausgebildet. Beispielsweise ist die Sende- und Empfangseinheit an die Steuervorrichtung ansteckbar ausgebildet. Beispielsweise ist die Schnittstelle als eine USB-Schnittstelle und/oder Netzwerkschnittstelle ausgebildet.

Von Vorteil ist ebenfalls, dass die Messvorrichtung an einer Maschine, insbesondere einer Werkzeug- und/oder Messmaschine, vorhanden ist, wobei nach dem Empfangen und Verarbeiten der zweiten Verbindungsbestätigungs-Nachricht durch die Sende- und Empfangseinheit die Sende- und Empfangseinheit ein Bestätigungssignal an die Steuervorrichtung der Maschine sendet.

Vorteilhafterweise umfasst das Bestätigungssignal eine Bestätigungsinformation. Beispielsweise ist die Steuervorrichtung der Maschine dazu ausgebildet, die Bestätigungsinformation zu Empfangen, zu Verarbeitung und/oder zu Speichern. Beispielsweise ist die Steuervorrichtung dazu ausgebildet, nach dem Empfangen der Bestätigungsinformation die Verbindungsinformation an die Sende- und Empfangseinheit zu senden. Bevorzugterweise ist die Sende- und Empfangseinheit derart ausgebildet, dass die Sende- und Empfangseinheit die von der Steuervorrichtung übermittelte Verbindungsinformation Empfangen, Verarbeiten und/oder Speichern kann. Beispielsweise empfängt, verarbeitet und/oder speichert die Sende- und Empfangseinheit die Verbindungsinformation bevor die Sendevorrichtung der Sende- und Empfangseinheit die Verbindungsinformation an das Messinstrument sendet.

Eine vorteilhafte Ausbildung des Verfahrens ist außerdem, dass ein Schalten des Schaltelements als ein Auslenken eines Messelements des Messinstruments realisiert ist.

Als ein Auslenken des Messelements des Messinstruments wird vorzugsweise eine Verlagerung des Messelements aus einer Ruheposition in eine ausgelenkte Position oder umgekehrt verstanden.

Bevorzugterweise ist ein Messelements des Messinstruments als ein Element anzusehen mittels welchem eine Messaufgabe durch das Messinstrument realisierbar ist. Beispielsweise ist das Messinstruments als ein Touch-Probe-Messtaster vorhanden und das Messelement ist vorteilhafterweise als ein Taster oder ein Taststift des Messtasters ausgebildet. Denkbar ist auch, dass das Messinstrument als ein optischer Sensor vorhanden ist. Das Messelement des optischen Sensors ist z.B. ein Abstandssensor, wobei ein Schalten und/oder Auslenken des Abstandssensors darin zu sehen ist, dass in einen Messbereich des Abstandssensors ein Objekt bewegt wird, oder umgekehrt, sodass der Abstandssensor eine Zustandsänderung und/oder eine Abstandsänderung zwischen Sensor und Objekt detektiert.

Eine vorteilhafte Ausführungsform der Erfindung ist als eine Messvorrichtung umfassend eine Sende- und Empfangseinheit und ein Messinstrument ausgebildet, wobei das Messinstrument eine Schaltvorrichtung mit einem Schaltelement umfasst, wobei die Messvorrichtung dazu ausgebildet ist, ein Verfahren nach einer der vorangegangenen Ausführungsformen auszuführen.

Das Messinstrument ist beispielsweise als ein Messtaster, z.B. als ein Touch-Probe-Messtaster ausgebildet. Denkbar ist auch, dass das Messinstrument als ein insbesondere optisch, scannendes Messinstrument ausgebildet ist, z.B. als ein Abstandsmessinstrument. Denkbar ist auch, dass das Messinstrument als ein Dickenmessgerät und/oder als ein Schichtdickenmessgerät vorhanden ist.

Auch ist es von Vorteil, dass das Messinstrument eine Steuereinheit aufweist, wobei die Steuereinheit dazu ausgebildet ist, in einem Zeitraum von 10 Sekunden bis 10 Minuten nach Erhalt eines ersten Schaltsignals eine Verbindungsanfrage der Sende- und Empfangseinheit zu Verarbeiten. Hierdurch ist eine gewollte Kopplungsmöglichkeit des Messinstruments mit einer Sende- und Empfangseinheit vorteilhafterweise auf einen definierten Zeitraum begrenzt.

Bevorzugterweise ist die Steuereinheit dazu ausgebildet, in einem Zeitraum von 10 Sekunden bis 5 Minuten nach einem ersten Schalten des Schaltelements der Schaltvorrichtung des Messinstruments eine Verbindungsanfrage zu Verarbeiten. Zum Beispiel ist die Steuereinheit dazu ausgebildet, in einem Zeitraum von 5 Sekunden bis 10 Minuten, von 5 Sekunden bis 8 Minuten oder von 10 Sekunden bis 3 Minuten nach einem ersten Schalten des Schaltelements der Schaltvorrichtung des Messinstruments eine Verbindungsanfrage zu Verarbeiten. Beispielsweise ist die Steuereinheit dazu ausgebildet, in einem Zeitraum von 10 Sekunden bis 60 Sekunden nach einem ersten Schalten des Schaltelements der Schaltvorrichtung des Messinstruments eine Verbindungsanfrage zu Verarbeiten.

Außerdem ist es von Vorteil, dass das Messinstrument eine Steuereinheit aufweist, wobei die Steuereinheit dazu ausgebildet ist, in einem Zeitraum von 0 bis 10 Sekunden nach Erhalt eines ersten Schaltsignals und/oder in einem weiteren Zeitraum größer 10 Minuten nach dem ersten Schaltsignal eine Verbindungsanfrage zu Verwerfen. Hierdurch ist eine ungewollte Kopplung des Messinstruments mit einer Sende- und Empfangseinheit vorteilhafterweise vermieden.

Beispielsweise ist die Steuereinheit dazu ausgebildet, in einem Zeitraum von 0 bis 5 Sekunden nach Erhalt eines ersten Schaltsignals die Verbindungsanfrage zu verwerfen. Zum Beispiel ist eine Verbindungsanfrage, welche die Steuereinheit in einem ersten Zeitraum, z.B. von 0 bis 5 Sekunden nach dem Erhalt eines ersten Schaltsignals erhält, mit einer hohen Wahrscheinlichkeit insbesondere per Definition eines zeitlichen Ablaufs des Verbindungsverfahrens und/oder aufgrund von Verarbeitungszeiten und/oder Signallaufzeiten nicht Bestandteil des Verbindungsverfahrens zum Verbinden des Messinstruments mit einer Sende- und Empfangseinheit.

Vorteilhafterweise umfasst das Messinstrument, insbesondere die Steuereinheit des Messinstruments, eine Zeitgeber und/oder Timer. Beispielsweise startet der Zeitgeber nach dem Erhalt des ersten Schaltsignals. Beispielsweise startet der Zeitgeber bei 0. Bevorzugterweise ist die Steuereinheit derart ausgebildet, dass drei Zeiträume, ein erster Zeitraum, ein zweiter Zeitraum und ein dritter Zeitraum definiert vorhanden sind. Beispielsweise startet der erste Zeitraum mit dem Starten des Zeitgebers und erstreckt sich über eine erste Zeitspanne, z.B. über 10 Sekunden oder bis 10 Sekunden. Beispielsweise startet der zweite Zeitraum mit dem Ende des ersten Zeitraums und erstreckt sich über eine zweite Zeitspanne, z.B. über 9 Minuten. Beispielsweise startet der dritte Zeitraum mit dem Ende des zweiten Zeitraums und erstreckt sich über eine dritte Zeitspanne. Beispielsweise endet der dritte Zeitraum mit dem Erhalten des weiteren Schaltsignals. Beispielsweise wird der Zeitgeber mit Erhalt des weiteren Schaltsignals gestoppt. Bevorzugterweise umfasst die Steuereinheit eine Steuerungsroutine und/oder ein Rechenorgan, welche und/oder welches prüft, ob der Zeitgeber gestartet ist und falls ja, welche Zeitspanne seit dem Start des Zeitgebers vergangen ist.

Eine Kommunikationsverbindung zwischen Sende- und Empfangseinheit und Messinstrument ist beispielsweise als eine optische Kommunikationsverbindung und/oder als eine Funkverbindung realisiert. Beispielsweise kommunizieren die Sende- und Empfangseinheit und das Messinstrument mittels optischer Signale und/oder mittels Funksignalen. Die optischen Signale sind beispielsweise Infrarotsignale. Die Funksignale sind beispielsweise Bluetooth-Signale. Vorteilhafterweise ist die Kommunikationsverbindung als eine serielle Kommunikationsverbindung ausgebildet. Beispielsweise umfasst die Sende- und Empfangseinheit und/oder das Messinstrument eine serielle Kommunikationsschnittstelle.

Denkbar ist auch, dass die Kommunikationsschnittstelle als eine kabellose Kommunikationsschnittstelle vorhanden ist. Beispielsweise ist die Kommunikationsschnittstelle als eine Funkschnittstelle ausgebildet. Beispielsweise als eine WLAN-Schnittstelle, als eine Bluetooth-Schnittstelle und/oder als eine Mobilfunkschnittstelle, z.B. als eine LTE-Schnittstelle. Beispielsweise umfasst die Kommunikationsschnittstelle eine Antenne. Vorstellbar ist, dass die Sende- und Empfangseinheit im Frequenzbereich von 700 bis 2600 Megahertz oder in einem Frequenzbereich um 2,4 Gigahertz, z.B. im Bereich zwischen 2,3 und 2,5 Gigahertz, oder in einem Frequenzbereich um 3,6 Gigahertz oder in einem Frequenzbereich um 60 Gigahertz mittels der Kommunikationsschnittstelle Informationen senden und empfangen kann.

Vorteilhafterweise umfasst die Sende- und Empfangseinheit eine Sende- und/oder Empfangsvorrichtung. Die Sende- und/oder Empfangsvorrichtung umfasst beispielsweise eine Antenne. Vorstellbar ist, dass die Sende- und/oder Empfangsvorrichtung im Frequenzbereich von 700 bis 2600 Megahertz und/oder in einem Frequenzbereich um 2,4 Gigahertz, z.B. im Bereich zwischen 2,3 und 2,5 Gigahertz, und/oder in einem Frequenzbereich um 3,6 Gigahertz und/oder in einem Frequenzbereich um 60 Gigahertz senden und empfangen kann. Beispielsweise kommunizieren die Sende- und Empfangseinheit und das Messinstrument basierend auf einem Übertragungsprotokoll gemäß dem Standard IEEE 802.15.4.

Ebenfalls erweist es sich von Vorteil, dass das Messinstrument eine Steuereinheit aufweist, wobei die Steuereinheit dazu ausgebildet ist, insbesondere ausschließlich in einem Zeitraum von 0 bis 2 Sekunden nach dem Senden der ersten Verbindungsbestätigungs-Nachricht, auf ein weiteres Schaltsignal der Schaltvorrichtung, welches durch ein insbesondere weiteres Schalten des Schaltelements ausgelöst ist, die zweite Verbindungsbestätigungs-Nachricht auszulösen.

Bevorzugterweise umfasst die Steuereinheit einen Timer und/oder einen Zeitgeber. Beispielsweise steuert die Steuereinheit das Messinstrument derart, dass das Messinstrument in einer ersten Zeitspanne, z.B. im ersten Zeitraum, nach dem ersten Auslenken nicht verbindungsbereit zum Verbinden mit einer Sende- und Empfangseinheit ist, in einer zweiten Zeitspanne, zum Beispiel im zweiten Zeitraum, verbindungsbereit zum Verbinden mit einer Sende- und Empfangseinheit ist und in einer dritten Zeitspanne, die beispielsweise nach der zweiten Zeitspanne beginnt, z.B. dem dritten Zeitraum, nicht verbindungsbereit zum Verbinden mit einer Sende- und Empfangseinheit ist.

Außerdem von Vorteil ist, dass die Sende- und Empfangseinheit dazu ausgebildet ist, sich mit bis zu 16 Messinstrumenten zu verbinden.

Eine vorteilhafte Ausführungsform der Erfindung ist eine Maschine, insbesondere Werkzeug- und/oder Messmaschine mit einer Messvorrichtung nach einer der vorangegangen genannten Ausführungen und/oder dass die Maschine dazu ausgebildet ist, ein Verfahren nach einem der vorangegangen genannten Varianten auszuführen.

### Beschreibung eines Ausführungsbeispiels

Ein Ausführungsbeispiel wird anhand der nachstehenden schematischen Zeichnungen unter Angabe weitere Einzelheiten und Vorteile näher erläutert.

Es zeigen:
- Figur 1: eine schematischen Darstellung einer Werkzeugmaschine mit einer Messvorrichtung umfassend ein Messinstrument und eine Sende- und Empfangseinheit,
- Figur 2: ein schematisch dargestellter beispielhafter Verfahrensablauf.

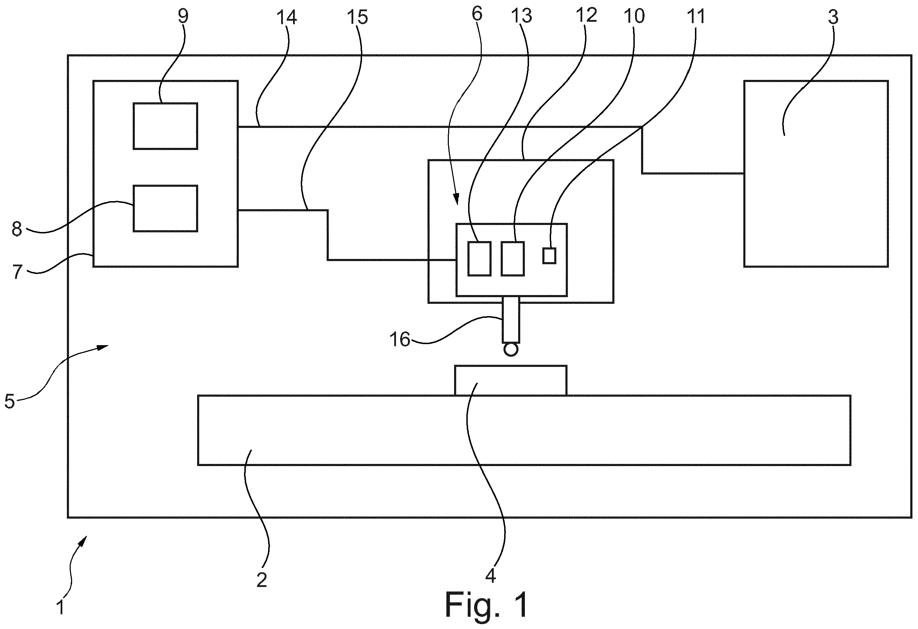

In Figur 1 ist eine Werkzeugmaschine 1 schematisch gezeigt, welche einen Bearbeitungstisch 2 und eine Steuervorrichtung 3 umfasst. Weiter Komponenten der Werkzeugmaschine 1, wie z.B. ein Bearbeitungswerkzeug sind aus Gründen der Übersichtlichkeit nicht dargestellt. Auf dem Bearbeitungstisch 2 ist ebenfalls schematisch gezeigt ein Werkstück 4 angeordnet.

An der Werkzeugmaschine 1 ist eine Messvorrichtung 5 an einer Bewegungsachse 12 angeordnet. Die Messvorrichtung 5 umfasst ein Messinstrument 6, welches in Figur 1 beispielhaft in Form eines Messtasters gezeigt ist, und eine Sende- und Empfangseinheit 7. Die Sende- und Empfangseinheit 7 umfasst eine Sendevorrichtung 8 und z.B. eine Empfangsvorrichtung 9. Das Messinstrument 6 weist z.B. eine Schaltvorrichtung 10 auf und beispielsweise einen Schalter 11. Außerdem umfasst das Messinstrument 6 vorteilhafterweise eine Steuereinheit 13.

Die Steuervorrichtung 3 und die Sende- und Empfangseinheit 7 sind vorteilhafterweise mittels eines Kommunikationskabels 14 miteinander verbunden, sodass ein Übermittlung einer Verbindungsinformation von der Steuervorrichtung 3 an die Sende- und Empfangseinheit 7 realisierbar ist.

Beispielsweise ist die Sende- und Empfangseinheit 7 mit dem Messinstrument 6 über eine drahtlose Verbindung 15 verbindbar, sodass beispielsweise eine Verbindungsanfrage durch die Sendevorrichtung 8 der Sende- und Empfangseinheit 7 an das Messinstrument 6 übermittelbar ist.

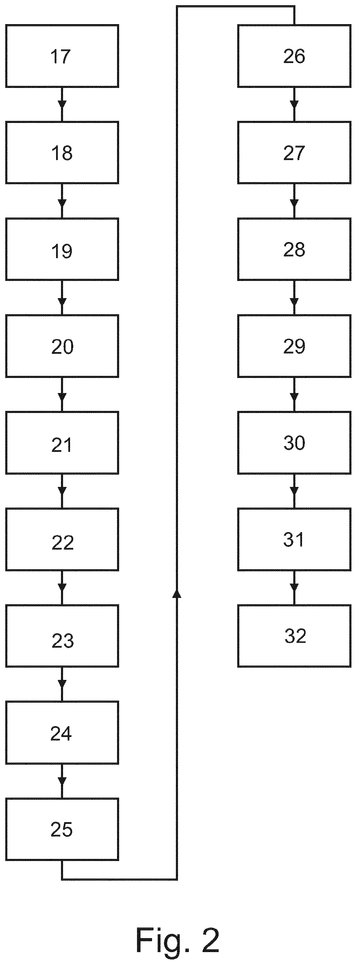

In Figur 2 ist ein Verfahrensablauf beispielhaft dargestellt. Das Verfahren beginnt beispielsweise in einem ersten Verfahrensschritt 17 durch Starten eines Verbindungsprogramms an der Steuervorrichtung 3 der Werkzeugmaschine 1. Aufgrund des Verbindungsprogramms erfolgt zum Beispiel in einem weiteren Verfahrensschritt 18 ein Bewegen der Bewegungsachse 12, sodass beispielsweise ein Taststift 16 des Messinstruments 6 ausgelenkt und beispielsweise damit geschaltet wird. Beispielsweise befiehlt in einem weiteren Verfahrensschritt 19 die Steuervorrichtung 3 der Sende- und Empfangseinheit 7 eine Verbindungsablauf zum Verbinden der Sende- und Empfangseinheit 7 mit einem Messinstrument zu starten.

Vorteilhafterweise prüft das Messinstrument 6 unabhängig von den Verfahrensschritten 17 bis 19, insbesondere unabhängig von jedem Verfahrensschritt, ob ein Schaltsignal, aufgrund eines Schaltens des Schaltelements, in vorliegenden Fall beispielsweise ein Schalten des Taststifts 16 erfolgt ist. Beispielsweise prüft das Messinstrument 6, insbesondere die Schaltvorrichtung 10, in regelmäßigen Abständen, beispielsweise intervallartig, ob eine Änderung eines Schaltzustands des Schalters 11 und/oder des Taststifts 16 erfolgt ist.

In einem weiteren Verfahrensschritt 20 sendet die Sendevorrichtung 8 eine Verbindungsanfrage. Das Messinstrument 6 empfängt die Verbindungsanfrage der Sendevorrichtung 8 in einem weiteren Verfahrensschritt 21. Ist kein Schaltsignal ergangen, verwirft das Messinstrument 6 die Verbindungsanfrage beispielsweise. Ist ein Schaltsignal ergangen, wie im vorliegenden Beispiel durch Verfahrensschritt 18 erfolgt, dann sendet das Messinstrument in einem weiteren Verfahrensschritt 22 eine erste Verbindungsbestätigungs-Nachricht an die Sende- und Empfangseinheit 7.

In einem weiteren Verfahrensschritt 23 empfängt die Sende- und Empfangseinheit 7 die erste Verbindungsbestätigungs-Nachricht und verarbeitet diese. In einem weiteren Verfahrensschritt 24 übermittelt die Sende- und Empfangseinheit 7 der Steuervorrichtung 3 eine Information des Erhalts der ersten Verbindungsbestätigungs-Nachricht, woraufhin beispielsweise die Steuervorrichtung 3 in einem weiteren Verfahrensschritt 25 der Bewegungsachse 12 ein Bewegungsbefehl zum Bewegen der Bewegungsachse 12, zum Beispiel zum Zurückbewegen, übermittelt, wodurch beispielsweise ein weiteres Schalten des Taststifts 16, z.B. zurück in eine Ruhelage des Taststifts 16 erfolgt.

In einem weiteren Verfahrensschritt 26 erfolgt ein Prüfen des Messinstruments 6, ob ein weiteres Schaltsignal vorhanden ist und vorteilhafterweise ein Senden einer weiteren Verbindungsbestätigungs-Nachricht an die Sende- und Empfangseinheit 7.

Beispielsweise empfängt und verarbeitet in einem weiteren Verfahrensschritt 27 die Sende- und Empfangseinheit 7 die weitere Verbindungsbestätigungs-Nachricht.

Zum Beispiel sendet in einem nachfolgenden Verfahrensschritt 28 die Sende- und Empfangseinheit 7 eine Verbindungsinformation an das Messinstruments 6, wobei z.B. in einem weiteren Verfahrensschritt 29 das Messinstrument 6 die Verbindungsinformation empfängt, verarbeitet und speichert.

Vorteilhafterweise sendet das Messinstrument 6 in einem nachfolgenden Verfahrensschritt 30 eine dritte Verbindungsbestätigungs-Nachricht an die Sende- und Empfangseinheit 7. Beispielsweise empfängt und verarbeitet die Sende- und Empfangseinheit 7 die dritte Verbindungsbestätigungs-Nachricht in einem weiteren Verfahrensschritt 31.

Bevorzugterweise übermittelt die Sende- und Empfangseinheit 7 in einem nachfolgenden Verfahrensschritt 32 der Steuervorrichtung 3 eine Information, dass eine Kopplung der Sende- und Empfangseinheit 7 erfolgt ist.

### Bezugszeichenliste

- 1: Werkzeugmaschine
- 2: Bearbeitungstisch
- 3: Steuervorrichtung
- 4: Werkstück
- 5: Messvorrichtung
- 6: Messinstrument
- 7: Sende- und Empfangseinheit
- 8: Sendevorrichtung
- 9: Empfangsvorrichtung
- 10: Schaltvorrichtung
- 11: Schalter
- 12: Bewegungsachse
- 13: Steuereinheit
- 14: Kommunikationskabel
- 15: Verbindung
- 16: Taststift
- 17 - 32: Verfahrensschritt

## Patentansprüche

1. Verfahren zum Verbinden einer Sende- und Empfangseinheit (7) einer Messvorrichtung (5) mit einem Messinstrument (6) der Messvorrichtung (5), wobei die Messvorrichtung (5) an eine Maschine (1) anordenbar ist,
mit folgenden nacheinander durchzuführenden Verfahrensschritten:
- Prüfen des Messinstruments (6), ob ein erstes Schaltsignal, welches durch ein Schalten eines Schaltelements (11) einer Schaltvorrichtung (10) des Messinstruments (6) erfolgt, vorhanden ist,
- Senden einer Verbindungsanfrage durch eine Sendevorrichtung der Sende- und Empfangseinheit (7),
- Empfangen der Verbindungsanfrage durch das Messinstrument (6) und Verarbeiten der Verbindungsanfrage durch das Messinstrument (6),
- Senden einer ersten Verbindungsbestätigungs-Nachricht durch das Messinstrument (6) an die Sende- und Empfangseinheit (7),
- Empfangen der ersten Verbindungsbestätigungs-Nachricht durch eine Empfangsvorrichtung (9) der Sende- und Empfangseinheit (7) und Verarbeiten der ersten Verbindungsbestätigungs-Nachricht durch die Sende- und Empfangseinheit (7),
- Senden eines Bestätigungssignals an eine Steuervorrichtung (3) der Maschine (1) durch die Sende- und Empfangseinheit (7) nach dem Empfangen und Verarbeiten der ersten Verbindungsbestätigungs-Nachricht,
- Prüfen des Messinstruments (6), ob ein weitere Schaltsignal, welches durch ein Schalten eines Schaltelements (11) einer Schaltvorrichtung (10) des Messinstruments (6) erfolgt, vorhanden ist,
- Senden einer zweiten Verbindungsbestätigungs-Nachricht durch das Messinstrument (6) an die Sende- und Empfangseinheit (7),
- Empfangen und Verarbeiten der zweiten Verbindungsbestätigungs-Nachricht durch die Sende- und Empfangseinheit (7).

2. Verfahren nach dem vorangegangenen Anspruch 1, **dadurch gekennzeichnet, dass** nach dem Empfangen und Verarbeiten der zweiten Verbindungsbestätigungs-Nachricht durch die Sende- und Empfangseinheit (7) weitere nacheinander durchzuführenden Verfahrensschritte erfolgen:
- Senden von einer Verbindungsinformation durch die Sendevorrichtung der Sende- und Empfangseinheit (7) an das Messinstrument (6),
- Empfangen, Verarbeiten und Speichern der Verbindungsinformation durch das Messinstrument (6),
- Senden einer dritten Verbindungsbestätigungs-Nachricht durch das Messinstrument (6) an die Sende- und Empfangseinheit (7),
- Empfangen und Verarbeiten der dritten Verbindungsbestätigungs-Nachricht durch die Sende- und Empfangseinheit (7).

3. Verfahren nach einem der vorangegangenen Ansprüche 1 oder 2, **dadurch gekennzeichnet, dass** das Messinstrument (6) an einer Maschine (1) montiert ist, wobei durch Verfahren einer Bewegungsachse (12) der Maschine (1) relativ zu einer weiteren Komponente der Maschine (1) und damit durch Verfahren des Messinstruments (6), das Schalten des Schaltelements (11) der Schaltvorrichtung (10) des Messinstruments (6) bewirkt wird.

4. Verfahren nach einem der vorangegangenen Ansprüche,
**dadurch gekennzeichnet, dass** die Messvorrichtung (5) an einer Maschine (1) vorhanden ist, wobei zunächst die Sende- und Empfangseinheit (7) prüft, ob eine Übermittlung einer Verbindungsinformation von einer Steuervorrichtung (3) der Maschine (1) an die Sende- und Empfangseinheit (7) erfolgt ist.

5. Verfahren nach einem der vorangegangenen Ansprüche 2 bis 4,
**dadurch gekennzeichnet, dass** die Messvorrichtung (5) an einer Maschine (1) vorhanden ist, wobei nach dem Empfangen und Verarbeiten der zweiten Verbindungsbestätigungs-Nachricht durch die Sende- und Empfangseinheit (7) die Sende- und Empfangseinheit (7) ein Bestätigungssignal an die Steuervorrichtung (3) der Maschine (1) sendet.

6. Verfahren nach einem der vorangegangenen Ansprüche,
**dadurch gekennzeichnet, dass** ein Schalten des Schaltelements als ein Auslenken eines Messelements (16) des Messinstruments (6) realisiert ist.

7. Messvorrichtung (5) umfassend eine Sende- und Empfangseinheit (7) und ein Messinstrument (6), wobei das Messinstrument (6) eine Schaltvorrichtung (10) mit einem Schaltelement (11) umfasst, wobei die Messvorrichtung (5) dazu ausgebildet ist, ein Verfahren nach einem der vorangegangenen Ansprüche 1 bis 6 auszuführen.

8. Messvorrichtung (5) nach dem vorangegangenen Anspruch 7,
**dadurch gekennzeichnet, dass** das Messinstrument (6) eine Steuereinheit (13) aufweist, wobei die Steuereinheit (13) dazu ausgebildet ist, in einem Zeitraum von 10 Sekunden bis 10 Minuten nach Erhalt eines ersten Schaltsignals eine Verbindungsanfrage der Sende- und Empfangseinheit (7) zu Verarbeiten.

9. Messvorrichtung (5) nach einem der vorangegangenen Ansprüche 7 oder 8, **dadurch gekennzeichnet, dass** das Messinstrument (6) eine Steuereinheit (13) aufweist, wobei die Steuereinheit (13) dazu ausgebildet ist, in einem Zeitraum von 0 bis 10 Sekunden nach Erhalt eines ersten Schaltsignals und/oder in einem weiteren Zeitraum größer 10 Minuten nach dem ersten Schaltsignal eine Verbindungsanfrage zu Verwerfen.

10. Messvorrichtung (5) nach einem der vorangegangenen Ansprüche, **dadurch gekennzeichnet, dass** das Messinstrument (6) eine Steuereinheit (13) aufweist, wobei die Steuereinheit (13) dazu ausgebildet ist, in einem Zeitraum von 0 bis 2 Sekunden nach dem Senden der ersten Verbindungsbestätigungs-Nachricht auf ein weiteres Schaltsignal der Schaltvorrichtung (10), welches durch ein Schalten des Schaltelements (11) ausgelöst ist, die zweite Verbindungsbestätigungs-Nachricht auszulösen.

11. Messvorrichtung (5), nach einem der vorangegangenen Ansprüche 7 bis 10, **dadurch gekennzeichnet, dass** die Sende- und Empfangseinheit (7) dazu ausgebildet ist, sich mit bis zu 16 Messinstrumenten zu verbinden.

12. Maschine (1), insbesondere Werkzeug- und/oder Messmaschine, mit einer Steuerungsvorrichtung (3), wobei die Maschine (1) eine Messvorrichtung (5) nach einem der vorangegangenen Ansprüche 7 bis 11 aufweist oder wobei die Maschine (1) dazu ausgebildet ist, ein Verfahren nach einem der Ansprüche 1 bis 6 auszuführen.

## Claims

1. Method for connecting a transmitting and receiving unit (7) of a measuring apparatus (5) to a measuring instrument (6) of the measuring apparatus (5), wherein the measuring apparatus (5) can be arranged on a machine (1),
having the following method steps to be carried out in succession:
- testing the measuring instrument (6) in order to determine whether there is a first switching signal effected by switching a switching element (11) of a switching apparatus (10) of the measuring instrument (6),
- a transmitting apparatus of the transmitting and receiving unit (7) transmitting a connection request,
- the measuring instrument (6) receiving the connection request and the measuring instrument (6) processing the connection request,
- the measuring instrument (6) transmitting a first connection confirmation message to the transmitting and receiving unit (7),
- a receiving apparatus (9) of the transmitting and receiving unit (7) receiving the first connection confirmation message and the transmitting and receiving unit (7) processing the first connection confirmation message,
- the transmitting and receiving unit (7) transmitting a confirmation signal to a control apparatus (3) of the machine (1) after receiving and processing the first connection confirmation message,
- testing the measuring instrument (6) in order to determine whether there is a further switching signal effected by switching a switching element (11) of a switching apparatus (10) of the measuring instrument (6),
- the measuring instrument (6) transmitting a second connection confirmation message to the transmitting and receiving unit (7),
- the transmitting and receiving unit (7) receiving and processing the second connection confirmation message.

2. Method according to the preceding Claim 1, **characterized in that**, after the second connection confirmation message has been received and processed by the transmitting and receiving unit (7), further method steps to be carried out in succession are carried out:
- the transmitting apparatus of the transmitting and receiving unit (7) transmitting connection information to the measuring instrument (6),
- the measuring instrument (6) receiving, processing and storing the connection information,
- the measuring instrument (6) transmitting a third connection confirmation message to the transmitting and receiving unit (7),
- the transmitting and receiving unit (7) receiving and processing the third connection confirmation message.

3. Method according to either of the preceding Claims 1 and 2, **characterized in that** the measuring instrument (6) is mounted on a machine (1), wherein the switching of the switching element (11) of the switching apparatus (10) of the measuring instrument (6) is effected by moving a movement axis (12) of the machine (1) relative to a further component of the machine (1) and therefore by moving the measurement instrument (6).

4. Method according to one of the preceding claims, **characterized in that** the measuring apparatus (5) is present on a machine (1), wherein the transmitting and receiving unit (7) first of all checks whether connection information has been transmitted from a control apparatus (3) of the machine (1) to the transmitting and receiving unit (7).

5. Method according to one of the preceding Claims 2 to 4, **characterized in that** the measuring apparatus (5) is present on a machine (1), wherein, after the second connection confirmation message has been received and processed by the transmitting and receiving unit (7), the transmitting and receiving unit (7) transmits a confirmation signal to the control apparatus (3) of the machine (1).

6. Method according to one of the preceding claims, **characterized in that** switching of the switching element is realized as deflection of a measuring element (16) of the measuring instrument (6).

7. Measuring apparatus (5) comprising a transmitting and receiving unit (7) and a measuring instrument (6), wherein the measuring instrument (6) comprises a switching apparatus (10) having a switching element (11), wherein the measuring apparatus (5) is designed to carry out a method according to one of the preceding Claims 1 to 6.

8. Measuring apparatus (5) according to the preceding Claim 7, **characterized in that** the measuring instrument (6) has a control unit (13), wherein the control unit (13) is designed to process a connection request from the transmitting and receiving unit (7) in a period of 10 seconds to 10 minutes after receiving a first switching signal.

9. Measuring apparatus (5) according to either of the preceding Claims 7 and 8, **characterized in that** the measuring instrument (6) has a control unit (13), wherein the control unit (13) is designed to reject a connection request in a period of 0 to 10 seconds after receiving a first switching signal and/or in a further period of greater than 10 minutes after the first switching signal.

10. Measuring apparatus (5) according to one of the preceding claims, **characterized in that** the measuring instrument (6) has a control unit (13), wherein the control unit (13) is designed to trigger the second connection confirmation message in a period of 0 to 2 seconds after the transmission of the first connection confirmation message in response to a further switching signal from the switching apparatus (10) that has been triggered by switching of the switching element (11).

11. Measuring apparatus (5) according to one of the preceding Claims 7 to 10, **characterized in that** the transmitting and receiving unit (7) is designed to be connected to 16 measuring instruments.

12. Machine (1), in particular machine tool and/or measuring machine, having a control apparatus (3), wherein the machine (1) has a measuring apparatus (5) according to one of the preceding Claims 7 to 11, or wherein the machine (1) is designed to carry out a method according to one of Claims 1 to 6.

## Revendications

1. Procédé permettant de relier une unité d'émission et de réception (7) d'un dispositif de mesure (5) à un instrument de mesure (6) du dispositif de mesure (5), le dispositif de mesure (5) pouvant être disposé sur une machine (1),
comprenant les étapes de procédé suivantes à exécuter successivement et consistant à :
- vérifier l'instrument de mesure (6) pour savoir s'il existe un premier signal de commutation qui intervient par une commutation d'un élément de commutation (11) d'un dispositif de commutation (10) de l'instrument de mesure (6),
- envoyer une demande de connexion par un dispositif d'émission de l'unité d'émission et de réception (7),
- recevoir la demande de connexion par l'instrument de mesure (6), et traiter la demande de connexion par l'instrument de mesure (6),
- envoyer un premier message de confirmation de connexion par l'instrument de mesure (6) à l'unité d'émission et de réception (7),
- recevoir le premier message de confirmation de connexion par un dispositif de réception (9) de l'unité d'émission et de réception (7), et traiter le premier message de confirmation de connexion par l'unité d'émission et de réception (7),
- envoyer un signal de confirmation à un dispositif de commande (3) de la machine (1) par l'unité d'émission et de réception (7) après réception et traitement du premier message de confirmation de connexion,
- vérifier l'instrument de mesure (6) pour savoir s'il existe un autre signal de commutation qui intervient par une commutation d'un élément de commutation (11) d'un dispositif de commutation (10) de l'instrument de mesure (6),
- envoyer un deuxième message de confirmation de connexion par l'instrument de mesure (6) à l'unité d'émission et de réception (7),
- recevoir et traiter le deuxième message de confirmation de connexion par l'unité d'émission et de réception (7).

2. Procédé selon la revendication précédente 1, **caractérisé en ce que** après réception et traitement du deuxième message de confirmation de connexion par l'unité d'émission et de réception (7), d'autres étapes de procédé à exécuter successivement sont effectuées, consistant à :
- envoyer une information de connexion par le dispositif d'émission de l'unité d'émission et de réception (7) à l'instrument de mesure (6),
- recevoir, traiter et stocker l'information de connexion par l'instrument de mesure (6),
- envoyer un troisième message de confirmation de connexion par l'instrument de mesure (6) à l'unité d'émission et de réception (7),
- recevoir et traiter le troisième message de confirmation de connexion par l'unité d'émission et de réception (7).

3. Procédé selon l'une quelconque des revendications précédentes 1 ou 2, **caractérisé en ce que** l'instrument de mesure (6) est monté sur une machine (1), dans lequel le déplacement d'un axe de mouvement (12) de la machine (1) par rapport à un autre composant de la machine (1), et donc le déplacement de l'instrument de mesure (6), provoque la commutation de l'élément de commutation (11) du dispositif de commutation (10) de l'instrument de mesure (6).

4. Procédé selon l'une quelconque des revendications précédentes, **caractérisé en ce que** le dispositif de mesure (5) existe sur une machine (1), dans lequel d'abord l'unité d'émission et de réception (7) vérifie si une transmission d'une information de connexion d'un dispositif de commande (3) de la machine (1) à l'unité d'émission et de réception (7) est intervenue.

5. Procédé selon l'une quelconque des revendications précédentes 2 à 4, **caractérisé en ce que** le dispositif de mesure (5) existe sur une machine (1), dans lequel après réception et traitement du deuxième message de confirmation de connexion par l'unité d'émission et de réception (7), l'unité d'émission et de réception (7) envoie un signal de confirmation au dispositif de commande (3) de la machine (1).

6. Procédé selon l'une quelconque des revendications précédentes, **caractérisé en ce qu'**une commutation de l'élément de commutation est réalisée comme une déviation d'un élément de mesure (16) de l'instrument de mesure (6) .

7. Dispositif de mesure (5), comprenant une unité d'émission et de réception (7) et un instrument de mesure (6), dans lequel l'instrument de mesure (6) comprend un dispositif de commutation (10) pourvu d'un élément de commutation (11), dans lequel le dispositif de mesure (5) est réalisé pour exécuter un procédé selon l'une quelconque des revendications précédentes 1 à 6.

8. Dispositif de mesure (5) selon la revendication précédente 7, **caractérisé en ce que** l'instrument de mesure (6) présente une unité de commande (13), dans lequel l'unité de commande (13) est réalisée pour traiter une demande de connexion de l'unité d'émission et de réception (7) dans un délai de 10 secondes à 10 minutes après réception d'un premier signal de commutation.

9. Dispositif de mesure (5) selon l'une quelconque des revendications précédentes 7 ou 8, **caractérisé en ce que** l'instrument de mesure (6) présente une unité de commande (13), dans lequel l'unité de commande (13) est réalisée pour rejeter une demande de connexion dans un délai de 0 à 10 secondes après réception d'un premier signal de commutation et/ou dans un autre délai de plus de 10 minutes après le premier signal de commutation.

10. Dispositif de mesure (5) selon l'une quelconque des revendications précédentes, **caractérisé en ce que** l'instrument de mesure (6) présente une unité de commande (13), dans lequel l'unité de commande (13) est réalisée pour déclencher le deuxième message de confirmation de connexion dans un délai de 0 à 2 secondes après l'envoi du premier message de confirmation de connexion suite à un autre signal de commutation du dispositif de commutation (10) qui est déclenché par une commutation de l'élément de commutation (11).

11. Dispositif de mesure (5) selon l'une quelconque des revendications précédentes 7 à 10, **caractérisé en ce que** l'unité d'émission et de réception (7) est réalisée pour se connecter à jusqu'à 16 instruments de mesure.

12. Machine (1), en particulier machine-outil et/ou machine de mesure, comprenant un dispositif de commande (3), dans lequel la machine (1) présente un dispositif de mesure (5) selon l'une quelconque des revendications précédentes 7 à 11, ou dans lequel la machine (1) est réalisée pour effectuer un procédé selon l'une quelconque des revendications 1 à 6.
